# EUROPEAN PATENT SPECIFICATION

(11) **EP 0 364 961 B1**
(45) Date of publication and mention of the grant of the patent: **14.12.1994**
(21) Application number: 89119271.8
(22) Date of filing: 17.10.1989
(51) Int. Cl.: G11B 20/18, H04N 5/94, H04N 9/88

(54) **Recording error detection circuit and recording/reproducing apparatus**
Schaltung zur Erkennung von Aufzeichnungsfehlern und Aufzeichnungs- und Wiedergabeeinrichtung
Circuit de détection d'erreur d'enregistrement et appareil d'enregistrement et de reproduction

(30) Priority: 17.10.1988 JP 259597/88
(43) Date of publication of application: 25.04.1990
(73) Proprietor: SONY CORPORATION, Tokyo 141 (JP)
(72) Inventor: Murakami, Yoshihiro, Shinagawa-ku Tokyo (JP)
(74) Representative: Schmidt-Evers, Jürgen, Dipl.-Ing.

(56) References cited:
- US-A- 4 672 483
- PATENT ABSTRACTS OF JAPAN vol. 9, no. 113 (P-356)(1836)17 May 1985 & JP-A-60 000 673 ( MATSUSHITA DENKI SANGYO K. K. ) 5 January 1985
- PATENT ABSTRACTS OF JAPAN vol. 10, no. 341 (P-517)(2397) 18 November 1986
- PATENT ABSTRACTS OF JAPAN vol. 10, no. 101 (P-447)(2158)17 April 1986 & JP-A-60 231 982 ( SONY K. K. ) 18 November 1985
- SMPTE JOURNAL vol. 97, no. 3, March 1988, USR. BRUSH: 'Design considerations for the D-2 NTSC composite DVTR'

## Description

This invention relates to a recording error detection circuit and a recording/reproducing apparatus for detecting recording errors based on the comparison of digital data recorded on a recording medium and digital data reproduced from the firstly started digital data. The present invention is applicable to a so-called D1 or D2 format digital video tape recorder adapted for recording and/or reproducing digital data.

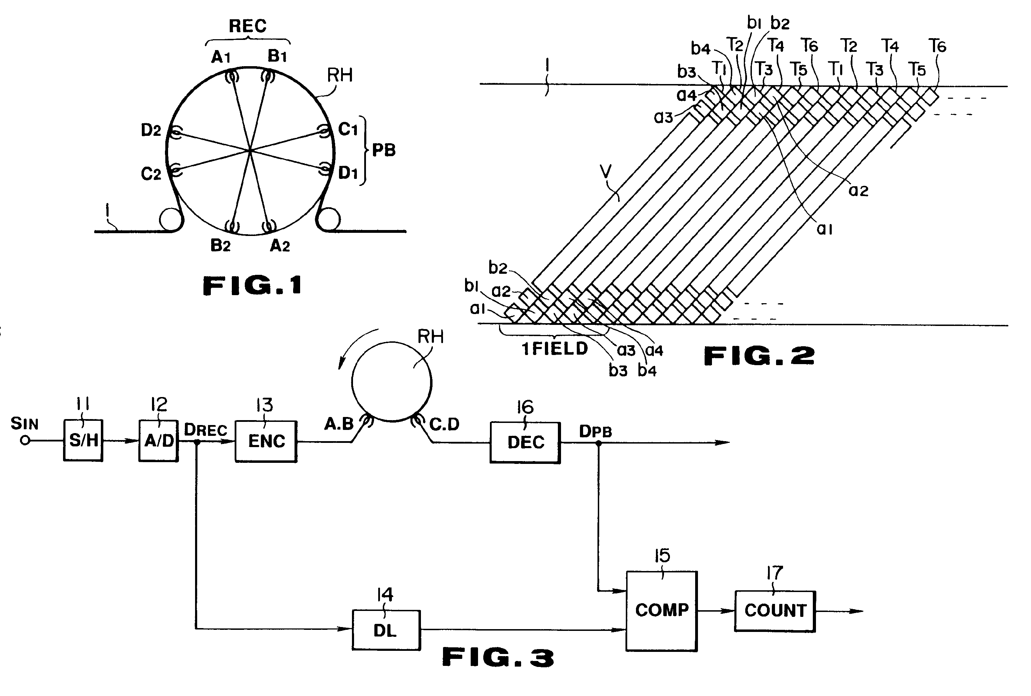

In a so-called D1 or D2 format composite digital video tape recorder, it has been customary to record the digitized video data and audio data sequentially on recording tracks T inclined with respect to the longitudinal direction of a magnetic tape 1, as shown in Fig. 2, using a rotary magnetic head device RH such as shown in Fig. 1.

The rotary magnetic head device RH shown in Fig. 1 is provided with paired recording heads A₁, B₁; A₂, B₂ arranged at an interval of 180° from each other and paired reproducing heads C₁, D₁; C₂, D₂ arranged at an interval of 180° from each other and in a direction extending orthogonally to the recording heads A₁, B₁, A₂, B₂. Each of these pairs of recording heads A₁, B₁; A₂, B₂ and reproducing heads C₁, D₁; C₂, D₂ is arranged with a height difference equal to one track width. In the case of the NTSC system, for example, the rotary magnetic head device RH is driven at the rate of one and a half revolution per field to record one-field video data on six tracks T₁ to T₆ on the magnetic tape 1, as shown in Fig. 2.

Meanwhile, video data V for each field are sequentially recorded at the central image region of each of the tracks T₁ to T₆ on the magnetic tape 1, while four-channel audio data a₁, a₂, a₃, a₄; b₁, b₂, b₃, b₄, compressed along the time axis, are recorded by duplicate recording on the inlet and outlet sides of each of the tracks T₁ to T₆.

In this type of the composite digital VTR, audio data of the same contents as the audio data recorded at the outlet sides of the tracks T₁ and T₂ are recorded as data b₃, b₄, a₃, a₄ at the inlet sides of the next adjacent tracks T₃ and T₄. Although not high in economic efficiency, such duplicate recording system, according to which the same audio data are recorded at two different locations on the tape, has an advantage that the probability of correct signal reproduction is doubled. Above all, in the format shown in Fig. 2, since the digital audio signals are recorded in the vicinity of both edge of the magnetic tape 1, the probability is high that data errors be caused during reproduction. In order to prevent this, the duplicate recording system is adopted. Incidentally, it should be noted that, while the audio data a₃, a₄ recorded on the track T₁ are recorded by the recording head A₁ and the audio data b₃, b₄ recorded on the track T₂ are recorded by the recording head B₁, the audio data b₃, b₄ recorded on the track T₃ are recorded by the recording head A₂ and the audio data a₃, a₄ recorded on the track T₄ are recorded by the recording head B₂.

Meanwhile, in the above mentioned digital video tape recorder, the same tracks as those on which video data and audio data have been recorded by the recording heads A₁, B₁, A₂ and B₂ may be reproduced simultaneously by the reproducing heads C₁, D₁, C₂, D₂. Thus, in an arrangement of the recording/reproducing system shown for example in Fig. 3, there is added a so-called verifying function of checking the data recorded by the recording heads A₁, B₁, A₂, B₂ against the data reproduced by the reproducing head C₁, D₁, C₂, D₂, for ascertaining whether or not recording has been made normally.

That is, in the conventional recording/reproducing system shown in Fig. 3, analog input signals S_{IN} are introduced via a sample-and-hold (S/H) circuit 11 to an analog to digital (A/D) converter 12. These analog input signals S_{IN} are supplied to an encoder 13 in the form of record data D_{RED} digitized by the A/D converter 12, which record data D_{REC} are simultaneously supplied via delay circuit 14 to a data comparator 15. The record data D_{REC} are subjected at the encoder 13 to predetermined data processing, such as data shuffling or addition of outer or inner codes for error correction, before being recorded by the recording heads A₁, B₁, A₂ and B₂ of the rotary magnetic head device RH on the tracks T₁ to T₆ on the magnetic type 1.

In the above mentioned recording/reproducing system, the reproducing operation for the tracks T₁ to T₆ is performed simultaneously with the above mentioned recording operation, and the playback output to be reproduced by the reproducing heads C₁, D₁, C₂ and D₂ is subjected to a predetermined decoding operation by a decoder 16 functionally associated with the encoder 13. In this manner, the playback data D_{PB} corresponding to the data recorded on the tracks T₁ to T₆ are obtained and supplied to the data comparator 15.

The delay circuit 14 affords a delay to the record data D_{REC} which delay is equal to the time consumed in obtaining the playback data D_{PB} corresponding to the record data D_{REC} recorded on the tracks T₁ to T₆. A more specific description of affording such delay to the record data is not given herein since it is the subject-matter of our copending Japanese Patent Application No. 38494/1988.

The record data D_{REC} supplied via the delay circuit 14 and the playback data are compared with each other at the data comparator 15 to detect non-coincidence and hence the occurrence of the record errors. The record error detection outputs from the data comparator 15 are counted by a counter 17 and an alarm is issued when the number of times of occurrence of the record errors exceeds a predetermined value.

Meanwhile, in the above mentioned conventional recording/reproducing system, shown in Fig. 3, wherein the non-coincidence between the record data D_{REC} supplied via delay circuit 14 and the playback data D_{PB} is detected by the data comparator 15 to detect the record errors, the record error detection outputs from the data comparator 15 are counted by the counter 17 and the alarm is issued when the number of times of occurrence of the record errors exceeds a predetermined value, there is a drawback that, when new data are recorded in superposition by an insert editing operation on a pre-recorded magnetic tape 1 and if there are any unerased data portion in a part of the superposed recorded portion, such unerased data portion being detected as the recording error by the data comparator 15, no alarm will be issued when the number of times of occurrence of the record errors is lesser than the predetermined value, such previously recorded but unerased data portion being then reproduced with the newly recorded data.

From Patent Abstract of Japan, vol. 9, no. 113 (P-356), 1985, JP-A-60.000.673, it is known to attain the monitoring and checking of recorded information by providing closely a first and second head, reproducing a signal recorded by the first head by the second head, and recording a comparison output signal between this reproducing signal and the original signal to be recorded by the first head.When the first head records a signal on a first track the second head reproduces the signal while following the first head. Then a reproducing signal is amplified by a reproducing circuit and fed to a comparator circuit. The comparator circuit compares the signal recorded by the first head and reproduced by the second head and the original data from an original data recording circuit and if a difference exists between the both, the first head records a signal representing an error signal of the first track into a special area by the indication of the comparison circuit and records the signal on the second track again.

It is the object of the present invention to provide an error detection circuit and a recording/reproducing apparatus, to which such an error detection circuit is applied, wherein data errors caused by failure in erasing the previously recorded data on the prerecorded magnetic tape may be detected reliably.

The object is solved by the features of claims 1 or 7 concerning the error detection circuit and claim 6 concering the respective recording/reproducing apparatus. Further developements of the invention are given by claims 2-5 and 8.

A description of embodiments of the invention is given hereafter with reference to the attached drawings, in which:

Fig. 1 is a diagrammatic view showing an example of a rotary magnetic head device employed in a digital video tape recorder.

Fig. 2 is a diagrammatic view showing track patterns in a digital video tape recorder employing the rotary magnetic head device shown in Fig. 1.

Fig. 3 is a block diagram showing the construction of the recording/reproducing system of a conventional digital video tape recorder having a verifying function.

Fig. 4 is a block diagram showing the construction of the recording/reproducing system of a digital video tape recorder having an error detection circuit according to the present invention.

Fig. 5 is a diagrammatic view showing an example of a recording format employed in the recording/reproducing system shown in Fig. 4.

Fig. 6 is a block diagram showing a modified embodiment of the error detection circuit according to the present invention.

An illustrative embodiment of the present invention will be explained in more detail hereinbelow.

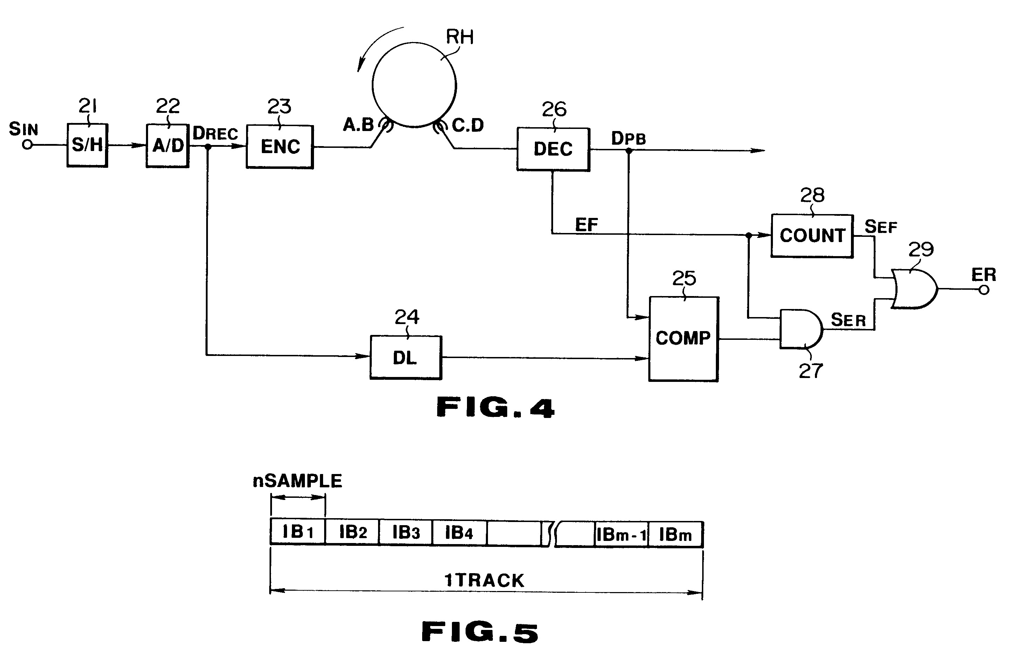

The recording/reproducing system of a digital video tape recorder embodying the present invention is illustrated in Fig. 4.

This digital video tape recorder functions to record and/or reproduce television signals via a magnetic tape 1 in accordance with the format shown in Fig. 2 with the use of the rotary magnetic head device RH shown in Fig. 1.

In the recording/reproducing system of the digital video tape recorder shown in Fig. 4, the analog input signals S_{IN} are supplied via S/H circuit 21 to an A/D converter 22. The record data D_{REC}, that are the analog input signals S_{IN} digitized by the A/D converter 22, are supplied, as the digital data to be recorded, to an encoder 23, while being simultaneously supplied via delay circuit 24 to a data comparator 25. The record data D_{REC} are subjected at the encoder 23 to a predetermined data processing inclusive of data shuffling or addition of error correction codes, before being recorded on the tracks T₁ to T₆ on the magnetic tape 1 by the recording heads A₁, B₁, A₂, B₂ of the rotary magnetic head device RH, shown in Fig. 1, in accordance with the format shown in Fig. 2.

The recording/reproducing system functions to reproduce data from the tracks T₁ to T₆, simultaneously with the recording operation, with the reproduced outputs from the reproducing heads C₁, D₁, C₂, D₂ being supplied to a decoder 26.

The decoder 26 functions to perform predetermined data processing of the playback data, inclusive of deshuffling and error correction based on the error correction codes, in operative association with the encoder 23. In this manner, playback data D_{PB} corresponding to the record data D_{REC} recorded on the tracks T₁ to T₆ are obtained and are supplied to the data comparator 25 and, error flags EF indicating data errors in the error-corrected play back data D_{PB} are obtained and are supplied to an AND gate 27.

It will be noted that the delay circuit 24 affords a delay to the record data D_{REC} which delay corresponds to the time consumed in obtaining playback data D_{PB} corresponding to the record data recorded on the tracks T₁ to T₆. In this manner, the record data D_{REC} are supplied to the data comparator 25 via delay circuit 24 at a timing coincident with the playback data D_{PB} from the decoder 26.

In the data comparator 25, the record data D_{REC} supplied via the delay circuit 24 and the playback data D_{PB} from the decoder 26 are compared to each other, and the non-coincidence detection output is supplied to the AND gate 27.

The AND gate 27 outputs a logical product output of the non-coincidence detection output from the data comparator 25 and the error flag EF, as a record error signal S_{ER}. This record error signal S_{ER} is outputted when the non-coincidence detection output is issued by the data comparator 25 thus indicating a recording error and the error-corrected playback data D_{PB} are reproduced in an error-free state by the decoder 26, that is, unerased data portions produced as a result of the insert editing are reproduced normally by the decoder 26.

In the present recording/reproducing system, the number of error flags EF of the playback data D_{PB} obtained by the decoder 26 is counted by a counter 28. Thus, when the number of times of data error occurrence as indicated by the error flags EF exceeds a predetermined value, the counter 28 issues a record error signal S_{EF} indicating the state of recording errors.

The record error signals S_{ER}, obtained by the AND gate 27, and the record error signal S_{EF}, obtained by the counter 28, are supplied to alarming means, not shown, via an OR gate 29, to issue an alarm that the recording error has been produced.

In the above described recording/reproducing system, since the recording errors are detected by using error-corrected playblock data D_{PB} reproduced by the decoder 26 and the error flags EF for the data D_{PB}, it is unnecessary to compare the totality of both the record data D_{REC} and the playback data D_{PB} by the data comparator 25, but it is only sufficient to compare these data by units of error correction code blocks in which the above error flags EF have been produced. That is, when the error correction codes are formed by a n number of samples, unerased data may be detected by simply detecting a 1/n number of the totality of samples. For example, in the case of a recording format in which one-track data are constituted by a m number of inner code blocks IB₁, IB₂, ... , IBm each constituted by a n number of samples, it is only sufficient to compare the m number of samples per track, thus allowing to reduce the scale or size of the delay circuit elements.

In the above described recording/reproducing system, the error correction codes are affixed to the input data in the encoder 23 as recording processing means to provide the record data D_{REC} recorded on the magnetic tape 1, while the recorded record data D_{REC} are reproduced from the magnetic tape 1 and subjected at the decoder 26 as reproducing processing means to error correction based on the error correction codes. On the other hand, possible non-coincidence between the error-corrected playback data D_{PB} from the decoder 26 and the record data D_{REC} supplied via the delay circuit 24 and that are to be recorded on the magnetic tape 1 is detected. The AND gate 27 as the record error signal output means outputs a recording error signal, when a non-coincidence detection output is obtained by the data comparator 25 with respect to the error-free playback data D_{PB} reproduced from the decoder 26, on the basis of the error flag EF indicating the data errors in the error-corrected playback data D_{PB}.

This recording error signal is outputted when the non-coincidence detection output is issued by the data comparator 25 thus indicating the recording error state and the error-corrected playback data D_{PB} are reproduced in an error-free state by the decoder 26, that is, when the data previously recorded and remained unerased in the course of the insert editing operation may be reproduced normally by the decoder 26. Thus the previously recorded and unerased data portions may be reliably detected by this recording error signal.

It is therefore possible with the above described digital video tape recorder provided with the recording/reproducing system to prevent recording of data errors caused by the failure in erasing the previously recorded data on the pre-recorded magnetic tape in the course of the so-called insert editing.

According to the present invention, as described hereinabove, those signals that are used for recording are used for comparison. Although the teaching of the present invention may be applied to error detection of video and audio data, it is also possible, in the case of the above described duplex recording system, that is, in the format in which the same audio data are recorded at different locations on the tape, to detect unerased audio signals with the use only of the playback audio data.

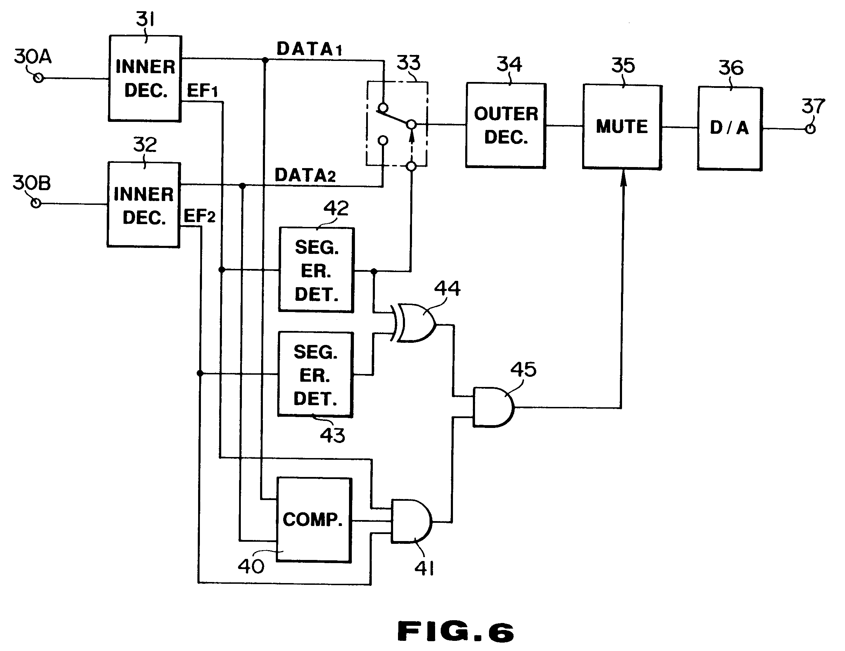

An embodiment of an error detection circuit in which the above described duplex recording system is effectively utilized for error detection is now explained in detail by referring to Fig. 6.

In the error detection circuit, shown in Fig. 6, the present invention is applied to the playback system for audio signals in a digital tape recorder having the track format as shown in Fig. 2 and including the rotary magnetic head device RH shown in Fig. 1.

In the error detection circuit, shown in Fig. 6, among the playback outputs reproduced from the tracks T₁ to T₆ on the magnetic tape 1 having the track format shown in Fig. 2, the playback outputs from the audio region at the inlet side to the video region, referred to hereinafter as the first audio playback outputs, such as the audio data b₃, b₄, a₃, a₄ reproduced from the audio region at the inlet side to the tracks T₃ and T₄, are supplied via first input terminal 30A to a first correction decoding circuit 31. On the other hand, the playback outputs from the audio region at the outlet side of the video region, referred to hereinafter as the second audio playback outputs, for example, audio data a₃, a₄, b₃, b₄ reproduced from the audio region at the outlet sides of the tracks T₁ and T₂, are supplied to a second correction decoding circuit 32 via second input terminal 30B.

The correction decoding circuits 31, 32 function to perform correction decoding, such as error correction or decoding, by units of data blocks of the inner codes, and to output correction decoded audio playback data DATA 1 and DATA 2 simultaneously with error flags EF1 and EF2. The correction decoded audio playback data DATA1 and DATA2, obtained by the correction decoding circuits 31, 32 are supplied to a data comparator 40, while being supplied to a third correction decoding circuit 34 via a selection switch 33. The error flag EF1, produced by the first correction decoding circuit 31, indicates the error-free state of the correction decoded audio playback data DATA1 by the logically high level "H". This error flag EF₁ is supplied to both a first AND gate 41 and a first burst error detection circuit 32. The error flag EF₂ obtained by the second correction decoding circuit 32 indicates the error-free state of the correction decoded audio playback data DATA2 by the logically high level "H". This error flag EF₂ is supplied to both the first AND gate 41 and a second burst error detection circuit 43.

The third correction decoding circuit 34 functions to perform correction decoding, such as error correction by outer codes or decoding, of the audio playback data supplied thereto via selection switch 33. The correction decoded audio playback data from the third correction decoding circuit 34 are supplied via a muting circuit 35 to a digital to analog (D/A) converter 36 and thereby converted into analog signals before being outputted as the playback audio signals at a signal output terminal 37.

The data comparator 40 compares the correction decoded audio playback data DATA1 and DATA2 from the correction decoding circuits 31 and 32 to issue a non-coincidence detection output indicating the state of non-coincidence by the logically high (H) level to the first AND gate 41. This first AND gate 41 is opened when both the error flags EF₁ and EF₂ are at the logically high (H) level, that is, when the correction decoded audio playback data DATA1, DATA2 from the correction decoding circuits 31, 32 are in the error-free state, to output the non-coincidence detection output of the data comparator 40 as the error detection output.

At this time, when the data remaining on the pre-recorded magnetic tape 1 due to non-erasure are reproduced normally by one of the correction decoding circuits 31, 32, the correction decoded audio playback data DATA1, DATA2, obtained at the correction decoding circuits 31, 32 are both error-free and non-coincident with each other, so that the error detection output indicating the data error due to non-erasure may be obtained at the first AND gate 41.

Meanwhile, the probability that the data remaining on the pre-recorded magnetic tape 1 due to non-erasure of the previously recorded data are reproduced normally and as the identical signal is so low that the data errors due to such non-erasure may be sufficiently detected by detecting that the correction decoded audio playback data DATA1, DATA2 obtained by the correction decoding circuits 31, 32 are both error-free and are inconsistent with each other.

In the above described error detection circuit, the error detection output produced by this first AND gate 41 is supplied as the control signal to the muting circuit 35 via second AND gate 45 for muting the playback audio signals at the time of occurrence of data errors due to non-erasure.

In will be noted that, in case of occurrence of data errors due to non-erasure, burst errors are necessarily produced before and after such data errors. Thus, in the present illustrative error detection circuit, the audio playback data DATA1, DATA2 are checked for the occurrence of the burst errors on the segment-by-segment basis. The detection output by the first burst error detection circuit 42 is supplied as the selection control signal to a control input end of the selection switch 33 to select the audio playback data free of the burst errors by the selection switch 33. In addition, the detection outputs from the burst error detection circuits 42, 43 are supplied via an exclusive OR circuit 44 to the second AND gate 45 as a gate control signal for opening the third AND gate 45 by the output of the exclusive OR circuit 44 only on occurrence of the burst errors in one of the audio playback data DATA1 and DATA2 for applying muting to the muting circuit 35 by the error detection output.

In the illustrative error detection circuit, as described hereinabove, each playback output of the record data dually recorded on the record tracks of the magnetic tape 1 with addition of the error correction codes is subjected to correction decoding by the inner codes at the correction decoding circuits 31, 32. The data comparator 40, detecting non-coincidence by comparing the correction-decoded playback outputs of the correction decoding circuits 31, 32, outputs an error detection signal when the both playback data are reproduced in an error-free state as the result of the correction decoding at the correction decoding circuits 31, 32 and are non-coincident with each other, that is, when those portions of the pre-recorded data that remain unerased in the course of the insert editing operation are reproduced normally by the correction decoding means.

Thus, in a digital video tape recorder for recording and/or reproducing so-called D1 or D2 format digital data in which digital audio data are dually recorded on the recording tracks, data errors caused by the failure in erasing previously recorded data on a magnetic tape in the course of the so-called insert editing may be detected easily and reliably with the use of the above described error detection circuit.

## Claims

1. An error detection circuit for a digital signal recording and reproducing apparatus wherein a digital signal is recorded on a record medium (1) and thereafter reproduced therefrom comprising means (25) for checking the identity between the digital signal prior to be recorded and the reproduced digital signal,
**characterized** **by** means (26) for decoding the reproduced coded digital signal, providing an error flag signal and supplying the error corrected digital signal to said means (25) for checking the identity ;
means (27) for detecting a first record error signal (S_{ER}) when the identity is not detected only in case of inexistence of said error flag signal indicating an existence of error in the corrected reproduced digital signal,
means (28) for counting a number of the error flag signals and for generating a second record error signal (S_{EF}) when the number reaches to a predetermined number, and
means (29) for selectively providing one of said first and second record error signals to an error monitoring device.

2. The error detection circuit according to claim 1, in which said digital signal is a video signal and an audio signal.

3. The error detection circuit according to claim 1 or 2, in which said checking means is a comparator (25).

4. The error detection circuit according to anyone of claims 1 to 3, in which said detecting means is an AND gate circuit (27).

5. The error detection circuit according to anyone of claims to 4, in which said selectively providing means is an OR gate circuit (29).

6. An apparatus for recording and reproducing a digital television signal comprising means for recording and thereafter reproducing a digital signal by a plurality of recording and reproducing heads mounted on a rotary drum in contact with a magnetic video tape and means for checking the identity between the digital signal prior to be recorded and the reproduced digital signal,
**characterized by**
means (22) for converting an analogue television signal to a digital television signal (D_{REC}),
means (23) for encoding the digital television signal so that an error correction code is added to the digital television signal (D_{REC}), the output of the means for encoding being applied to the means for recording and reproducing,
means for decoding (26) a reproduced digital television signal by said plurality of reproducing heads so that error corrected digital television signal (D_{PB}) and an error flag signal (EF) are generated thereby,
means (24) for delaying the digital television signal (D_{REC}) by a time corresponding to a time which is required for the process of encoding, recording, reproducing and decoding, the means (25) for checking the identity are connected to said decoding (26) and delaying (24) means for receiving output signals of the same and for detecting an identity between said output signals, and
means (27, 28, 29) for generating a record error signal indicating that record error occurs when said identity and the error flag signal are not detected so that an operator can recognize an occurrence of the record error thereby.

7. A recording error detection circuit for a digital signal recording/reproducing apparatus in which a new digital signal is recorded by overwriting on a magnetic tape (1) and another signal which is the same as said new digital signal is recorded at a different position on said tape, said circuit comprising comparing means,
**characterized by**
a first decoder (31) receiving the reproduced new digital signal to produce a first decoded digital signal and a first error flag,
a second decoder (32) receiving said new digital signal reproduced from said different position on the tape (1) to produce a second decoded digital signal and a second error flag,
said comparing means (40) indicate coincidence or non-coincidence between said first and second decoded signals, and
means (41) receiving said first and second error flags and an output signal of said comparing means (40) and issuing a signal indicating the occurrence of recording errors when said first and second error flags indicate no errors and the output of said comparing means (40) indicates non-coincidence.

8. The recording error detection circuit according to claim 7, further comprising;
first and second burst error detection means (42, 43) for detecting burst errors from the output signals of said first and second decoders, and
switching means (33) supplied with said first and second decoded digital signals and selectively taking out one of said first and second decoded digital signals under control by an output signal of at least one of said first and second burst error detection means (42, 43).

## Patentansprüche

1. Fehlerdetektorschaltung für ein Digitalsignal-Aufzeichnungs- und -Wiedergabegerät, bei welchem ein digitales Signal auf einem Aufzeichnungsmedium (1) aufgezeichnet und danach vom Aufzeichnungsmedium (1) wiedergegeben wird und das eine Einrichtung (25) zum Prüfen der Identität des vorher aufzuzeichnenden digitalen Signals und des wiedergegebenen digitalen Signals aufweist,
**gekennzeichnet durch,**
eine Einrichtung (26) zum Decodieren des wiedergegebenen codierten digitalen Signals, Bereitstellen eines Fehlerkennzeichen signals und Zuführen des fehlerkorrigierten digitalen Signals zur Einrichtung (25) zum Prüfen der Identität,
eine Einrichtung (27) zum Detektieren eines ersten Aufzeichnungsfehlersignals (SER) bei Nichtdetektion der Identität nur in dem Fall der Nichtexistenz des die Existenz eines Fehlers im korrigierten wiedergegebenen digitalen Signal anzeigenden Fehlerkennzeichensignals,
eine Einrichtung (28) zum Zählen einer Anzahl Fehlerkennzeichensignale und Erzeugen eines zweiten Aufzeichnungsfehlersignals (SEF), wenn die Anzahl eine vorbestimmte Zahl erreicht, und
eine Einrichtung (29) zum wahlweisen Zuführen des ersten oder zweiten Aufzeichnungsfehlersignals zu einer Fehlerüberwachungseinrichtung.

2. Fehlerdetektorschaltung nach Anspruch 1, wobei das digitale Signal aus einem Videosignal und einem Audiosignal besteht.

3. Fehlerdetektorschaltung nach Anspruch 1 oder 2, wobei die Prüfeinrichtung aus einem Komparator (25) besteht.

4. Fehlerdetektorschaltung nach einem der Ansprüche 1 bis 3,
wobei die Detektoreinrichtung aus einer UND-Tor-Schaltung (27) besteht.

5. Fehlerdetektorschaltung nach einem der Ansprüche 1 bis 4, wobei die wahlweise Zuführeinrichtung aus einer ODER-Tor-Schaltung (29) besteht.

6. Gerät zur Aufzeichnung und Wiedergabe eines digitalen Fernsehsignals, bestehend aus einer Einrichtung zum Aufzeichnen und nachfolgenden Wiedergeben eines digitalen Signals durch eine Anzahl von auf einer in Kontakt mit einem Videomagnetband stehenden Drehtrommel angebrachten Aufzeichnungs- und Wiedergabeköpfen und einer Einrichtung zum Prüfen der Identität des vorher aufzuzeichnenden digitalen Signals und des wiedergegebenen digitalen Signals
**gekennzeichnet durch**
eine Einrichtung (22) zur Umwandlung eines analogen Fernsehsignals in ein digitales Fernsehsignal (DREC),
eine Einrichtung (23) zum Codieren des digitalen Fernsehsignals derart, daß zum digitalen Fernsehsignal (DREC) ein Fehlerkorrekturcode addiert ist, wobei ein Ausgangssignal der Einrichtung zum Codieren der Einrichtung zum Aufzeichnen und Wiedergeben zugeführt ist,
eine Einrichtung (26) zum Decodieren eines wiedergegebenen digitalen Fernsehsignals durch die Anzahl Wiedergabeköpfe derart, daß das fehlerkorrigierte digitale Fernsehsignal (DPB) und ein Fehlerkennzeichensignal (EF) erzeugt werden,
eine Einrichtung (24) zum Verzögern des digitalen Fernsehsignals (DREC) um eine Zeit, die der für den Prozess des Codierens, Aufzeichnens, Wiedergebens und Decodierens erforderlichen Zeit entspricht, wobei die Einrichtung (25) zum Prüfen der Identität mit der Decodiereinrichtung (26) und der Verzögerungseinrichtung (24) verbunden ist, um deren Ausgangssignale zu empfangen und die Identität dieser Ausgangssignale festzustellen, und
eine Einrichtung (27, 28, 29) zur Erzeugung eines Aufzeichnungsfehlersignals, welches das Vorhandesein eines Aufzeichnungsfehlers anzeigt, wenn die Identität und das Fehlerkennzeichensignal nicht detektiert werden, wodurch eine Bedienungsperson das Vorhandensein eines Aufzeichnungsfehlers erkennen kann.

7. Aufzeichnungsfehler-Detektorschaltung für ein Digitalsignal-Aufzeichnungs/Wiedergabe-Gerät, bei welchem ein neues digitales Signal durch Überschreiben auf einem Magnetband (1) aufgezeichnet und ein anderes, dem neuen digitalen Signal gleiches Signal an einer anderen Stelle auf dem Band aufgezeichnet wird, wobei die Schaltung eine Vergleichseinrichtung aufweist,
**gekennzeichnet durch**,
einen ersten Decodierer (31), der das wiedergegebene neue digitale Signal zur Erzeugung eines ersten decodierten digitalen Signals und eines ersten Fehlerkennzeichens empfängt,
einen zweiten Decodierer (32), der das von der anderen Stelle auf dem Band (1) wiedergegebene neue digitale Signal zur Erzeugung eines zweiten decodierten digitalen Signals und eines zweiten Fehlerkennzeichens empfängt, wobei
die Vergleichseinrichtung (40) eine Koinzidenz oder Nichtkoinzidenz des ersten und zweiten decodierten Signals anzeigt, und durch
eine Einrichtung (41), die das erste und zweite Fehlerkennzeichen sowie ein Ausgangssignal der Vergleichseinrichtung (40) empfängt und ein das Vorhandensein von Aufzeichnungsfehlern anzeigendes Signal abgibt, wenn das erste und zweite Fehlerkennzeichen keine Fehler anzeigen und das Ausgangssignal der Vergleichseinrichtung (40) Nichtkoinzidenz anzeigt.

8. Aufzeichnungsfehler-Detektorschaltung nach Anspruch 7, mit
einer ersten und zweiten Burstfehler-Detektoreinrichtung (42, 43) zum Detektieren von Burstfehlern in den Ausgangssignalen des ersten und zweiten Decodierers und einer Schalteinrichtung (33), der das erste und zweite decodierte digitale Signal zugeführt ist und die wahlweise das erste oder zweite decodierte digitale Signal unter der Kontrolle eines Ausgangssignals wenigstens einer der beiden Burstfehler-Detektoreinrichtungen (42, 43) entnimmt.

## Revendications

1. Circuit de détection d'erreur pour un dispositif d'enregistrement et de lecture de signal numérique dans lequel un signal numérique est enregistré sur un support d'enregistrement (1) puis lu à partir de celui-ci, comprenant un moyen (25) pour vérifier la similitude entre le signal numérique avant l'enregistrement et le signal numérique lu,
circuit caractérisé par :
- un moyen (26) pour décoder le signal numérique codé lu, fournissant un signal de drapeau d'erreur et fournissant le signal numérique corrigé en erreur audit moyen (25) pour vérifier la similitude;
- un moyen (27) pour détecter un premier signal d'erreur d'enregistrement (S_{ER}) lorsque la similitude n'est pas détectée seulement dans le cas de l'absence dudit signal de drapeau d'erreur indiquant l'existence d'une erreur dans le signal numérique lu et corrigé;
- un moyen (28) pour compter un certain nombre de signaux de drapeau d'erreur et pour générer un second signal d'erreur d'enregistrement (S_{EF}) lorsque le nombre atteint un nombre prédéterminé; et
- un moyen (29) pour fournir, de façon sélective, un desdits premier et second signaux d'erreur d'enregistrement à un dispositif de contrôle d'erreur.

2. Circuit de détection d'erreur selon la revendication 1, dans lequel ledit signal numérique est un signal vidéo et un signal audio.

3. Circuit de détection d'erreur selon la revendication 1 ou 2, dans lequel ledit moyen de vérification est un comparateur (25).

4. Circuit de détection d'erreur selon l'une quelconque des revendications 1 à 3, dans lequel ledit moyen de détection est un circuit de porte ET (27).

5. Circuit de détection d'erreur selon l'une quelconque des revendications 1 à 4, dans lequel ledit moyen de génération sélective est un circuit de porte OU (29).

6. Dispositif d'enregistrement et de lecture d'un signal numérique de télévision comprenant un moyen pour l'enregistrement puis pour la lecture d'un signal numérique à l'aide d'une pluralité de têtes d'enregistrement et de lecture montées sur un tambour rotatif en contact avec une bande vidéo magnétique et un moyen pour vérifier la similitude entre le signal numérique avant l'enregistrement et le signal numérique lu,
dispositif caractérisé par :
- un moyen (22) pour convertir un signal analogique de télévision en un signal numérique de télévision (D_{REC});
- un moyen (23) pour coder le signal numérique de télévision (D_{REC}) de telle façon qu'un code de correction d'erreur soit ajouté au signal numérique de télévision (D_{REC}), la sortie du moyen de codage étant appliquée au moyen d'enregistrement et de lecture;
- un moyen pour le décodage (26) d'un signal numérique de télévision lu par ladite pluralité de têtes de lecture de telle façon que le signal numérique de télévision corrigé en erreur (D_{PB}) et un signal de drapeau d'erreur (EF) soient ainsi générés;
- un moyen (24) pour retarder le signal numérique de télévision (D_{REC}) d'un temps correspondant à celui qui est requis pour le processus de codage, d'enregistrement, de lecture et de décodage, le moyen (25) pour vérifier la similitude étant raccordé audit moyen de décodage (26) et de retard (24) pour recevoir des signaux de sortie de ceux-ci et pour détecter une similitude entre lesdits signaux de sortie; et
- des moyens (27, 28, 29) pour générer un signal d'erreur d'enregistrement indiquant qu'une erreur d'enregistrement survient lorsque ladite similitude et le signal de drapeau d'erreur ne sont pas détectés de telle façon qu'un opérateur puisse ainsi reconnaître l'apparition de l'erreur d'enregistrement.

7. Circuit de détection d'erreur d'enregistrement pour un dispositif d'enregistrement/lecture de signal numérique dans lequel un nouveau signal numérique est enregistré par surécriture sur une bande magnétique (1) et un autre signal identique audit nouveau signal numérique est enregistré sur une position différente de ladite bande, ledit circuit comprenant un moyen de comparaison,
circuit caractérisé par :
- un premier décodeur (31) recevant le nouveau signal numérique lu pour produire un premier signal numérique décodé et un premier drapeau d'erreur;
- un second décodeur (32) recevant ledit nouveau signal numérique lu de ladite position différente sur la bande (1) pour produire un second signal numérique décodé et un second drapeau d'erreur;
- ledit moyen de comparaison (40) indiquant une coïncidence ou une non coïncidence entre lesdites premier et second signaux décodés; et
- le moyen (41) recevant lesdits premier et second drapeaux d'erreur et un signal de sortie dudit moyen de comparaison (40) et délivrant un signal indiquant l'apparition d'erreurs d'enregistrement lorsque lesdits premier et second drapeaux d'erreur n'indiquent pas d'erreur et lorsque la sortie dudit moyen de comparaison (40) indique une non coïncidence.

8. Circuit de détection d'erreur d'enregistrement selon la revendication 7, comprenant de plus :
- des premier et second moyens de détection d'erreur de pic (42, 43) pour détecter des erreurs de pic des signaux de sortie desdits premier et second décodeurs; et
- un moyen de commutation (33) recevant lesdits premier et second signaux numériques décodés et prélevant, de façon sélective, un desdits premier et second signaux numériques décodés sous la commande d'un signal de sortie d'au moins un desdits premier et second moyens de détection d'erreur de pic (42, 43).
